# DEMANDE DE BREVET EUROPEEN

(11) **EP 0 939 011 A1**
(43) Date de publication de la demande: **01.09.1999**
(21) Numéro de dépôt: 99400286.3
(22) Date de dépôt: 08.02.1999
(51) Int. Cl.: B60R 21/00, B60R 21/32

(54) **Système de sécurité pour siège de véhicule automobile**

(30) Priorité: 27.02.1998 FR 9802438
(71) Demandeur: AUTOMOBILES PEUGEOT, 75116 Paris (FR); AUTOMOBILES CITROEN, 92200 Neuilly-sur-Seine (FR)
(72) Inventeur: Lalu, Daniel, 77190 Dammarie-les-Lys (FR); Grosjean, Olivier, 92300 Levallois (FR)
(74) Mandataire: Habasque, Etienne Joel Jean-François

(57) **Abrégé**

Ce système de sécurité pour siège de véhicule automobile, associé à au moins un module à sac gonflable, le siège du véhicule comportant des moyens formant boucle d'ancrage adaptés pour coopérer avec des moyens (8) formant pêne d'accrochage d'un siège enfant sur ce siège du véhicule et des moyens de détection de la présence de ce siège enfant pour désactiver le fonctionnement du module à sac gonflable, est caractérisé en ce que les moyens de détection comportent des moyens inductifs (9,10,11) de détection de l'engagement en position correcte d'accrochage des moyens formant pêne (8) dans les moyens formant boucle.

## Description

La présente invention concerne un système de sécurité pour siège de véhicule automobile.

Plus particulièrement, l'invention se rapporte à un système de sécurité pour un siège de véhicule associé à au moins un module à sac gonflable.

On a développé dans l'état de la technique, différents moyens permettant de fixer sur ces sièges de véhicule automobile, des sièges enfants.

D'une façon générale, le siège du véhicule comporte des moyens formant boucle d'ancrage adaptés pour coopérer avec des moyens formant pêne d'accrochage du siège enfant sur ce siège du véhicule.

Un exemple de réalisation de tels moyens est par exemple un dispositif de fixation de type ISOFIX.

De tels dispositifs permettent par exemple de fixer sur le siège du passager avant du véhicule, un siège enfant, par exemple dos à la route, mais l'on conçoit alors que pour des raisons de sécurité, il est souhaitable de désactiver le fonctionnement du module à sac gonflable associé à ce siège et disposé par exemple dans la planche de bord du véhicule afin d'éviter tout risque de blessure de l'enfant disposé dans le siège.

On a alors proposé d'intégrer dans ce siège du véhicule, des moyens de détection de la présence de ce siège enfant, pour couper le fonctionnement du ou des modules à sac gonflable associés à ce siège du véhicule.

Différents modes de réalisation de ces moyens de détection ont déjà été décrits dans l'état de la technique.

On pourra par exemple se reporter aux documents DE-195 18 410 et WO-97/19835.

Ces documents décrivent effectivement des dispositifs basés sur l'utilisation d'un transpondeur et d'un commutateur, permettant de détecter la présence du siège enfant, mais présentant des structures relativement complexes et peu fiables.

Le but de l'invention est de proposer un système de sécurité de ce type qui soit simple et fiable.

A cet effet, l'invention a pour objet un système de sécurité pour siège de véhicule automobile, associé à au moins un module à sac gonflable, le siège du véhicule comportant des moyens formant boucle d'ancrage adaptés pour coopérer avec des moyens formant pêne d'accrochage d'un siège enfant sur ce siège du véhicule et des moyens de détection de la présence de ce siège enfant pour désactiver le fonctionnement du module à sac gonflable, caractérisé en ce que les moyens de détection comportent des moyens inductifs de détection de l'engagement en position correcte d'accrochage des moyens formant pêne dans les moyens formant boucle.

L'invention sera mieux comprise à l'aide de la description qui va suivre, donnée uniquement à titre d'exemple et faite en se référant aux dessins annexés, sur lesquels :
- la Fig.1 représente une vue schématique de côté illustrant l'implantation d'un siège enfant sur un siège de passager avant d'un véhicule automobile;
- les Figs.2 et 3 illustrent de façon schématique le fonctionnement de moyens de fixation d'un siège enfant sur un siège de véhicule automobile; et
- la Fig.4 représente un schéma synoptique illustrant la structure de moyens de détection entrant dans la constitution d'un système selon l'invention.

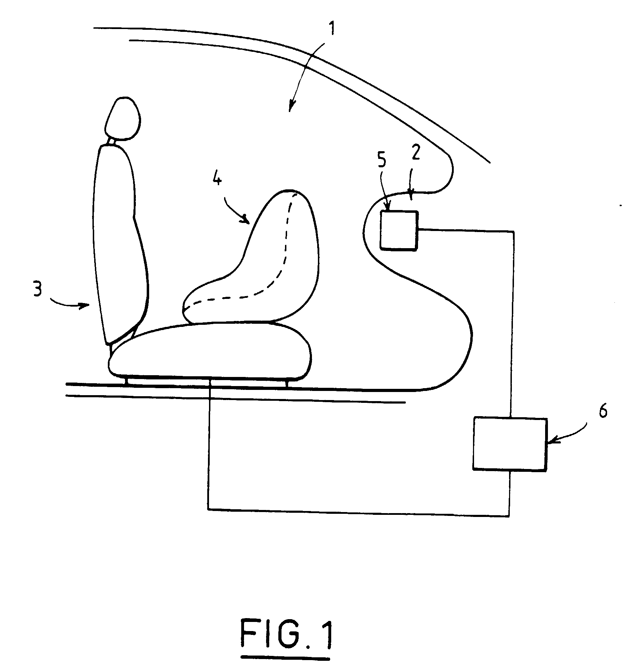

On reconnaît en effet sur la figure 1, un habitacle de véhicule automobile, désigné par la référence générale 1.

Cet habitacle est muni par exemple d'une planche de bord désignée par la référence générale 2 et d'un siège avant passager, désigné par la référence générale 3, fixé sur le reste de la structure du véhicule, de façon classique.

Un siège enfant désigné par la référence générale 4 est adapté pour être placé sur ce siège du passager avant du véhicule et pour être fixé sur celui-ci, de toute manière appropriée, comme par exemple en utilisant un dispositif de type ISOFIX.

Ce dispositif sera décrit plus en détail par la suite.

La planche de bord 2 comporte en regard de ce siège avant 3, un module à sac gonflable désigné par la référence générale 5, dont le fonctionnement est piloté par une unité centrale 6, de façon classique.

Cette unité centrale de traitement d'informations reçoit une information d'inhibition du fonctionnement du module à sac gonflable de moyens de détection de la présence du siège enfant 4 sur le siège du véhicule 3, comme cela sera décrit plus en détail par la suite, pour désactiver le fonctionnement de ce module à sac gonflable 5 lorsqu'un siège enfant 4 est placé sur le siège correspondant du véhicule, afin d'éviter tout risque de blessure de l'enfant.

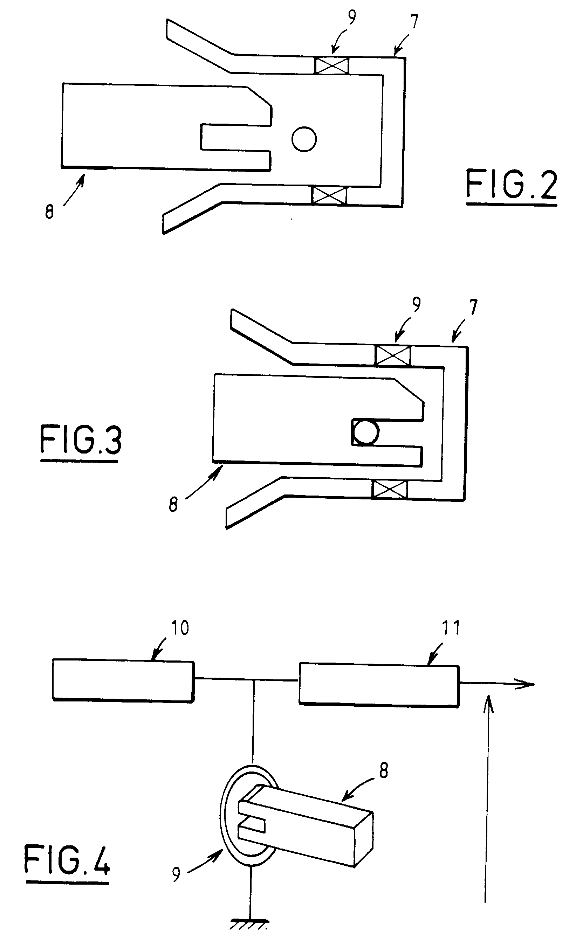

Les moyens de fixation du siège enfant sur le siège du véhicule peuvent par exemple comporter comme cela est représenté sur les figures 2 et 3, des moyens formant boucle d'ancrage désignés par la référence générale 7, du siège du véhicule, adaptés pour coopérer avec des moyens formant pêne d'accrochage 8 du siège enfant sur ce siège du véhicule, de façon classique.

Comme cela a été indiqué précédemment, le siège du véhicule est muni de moyens de détection de la présence du siège enfant pour désactiver le fonctionnement du module à sac gonflable.

Selon l'invention, ces moyens de détection comprennent des moyens inductifs de détection de l'engagement en position correcte d'accrochage des moyens formant pêne 8 du siège enfant dans les moyens formant boucle 7 du siège du véhicule.

Dans l'exemple de réalisation décrit sur ces figures 2 et 3, ces moyens de détection comprennent au moins une bobine 9 enroulée par exemple dans les ou chaque moyens formant boucle d'ancrage comme cela est illustré sur ces figures, les moyens de fixation pouvant par exemple comporter plusieurs boucles et pênes complémentaires.

De plus, au moins une portion des ou de chaque moyens formant pêne d'accrochage 8 est en matériau ferromagnétique et la bobine 9 des ou de chaque moyens formant boucle est reliée d'une part à des moyens de génération d'un signal d'excitation 10, comme cela est représenté sur la figure 4 et d'autre part, à des moyens d'analyse 11 du signal aux bornes de cette bobine 9, pour détecter la présence ou l'absence des moyens en forme de pêne dans les moyens en forme de boucle.

En effet, tant que les moyens en forme de pêne 8 ne sont pas engagés correctement en position d'accrochage dans les moyens en forme de boucle 7, la bobine 9 présente une première inductance déterminée.

Par contre, lorsque les moyens en forme de pêne et plus particulièrement la portion en matériau ferromagnétique de ceux-ci sont en position correcte d'accrochage dans les moyens en forme de boucle et donc dans la bobine 9, cette portion de ces moyens joue le rôle d'un noyau magnétique pour modifier la valeur de l'inductance de la bobine 9, qui passe alors à une seconde valeur prédéterminée.

Cette variation d'inductance de la bobine 9 peut alors être détectée et analysée par les moyens d'analyse 11 pour détecter qu'un siège enfant a été placé sur le siège correspondant du véhicule et que les moyens de fixation de celui-ci sur ce siège du véhicule, sont ou non en position correcte d'accrochage et inhiber le fonctionnement du module à sac gonflable.

On conçoit alors que le système de sécurité selon l'invention présente un certain nombre d'avantages par rapport aux systèmes de l'état de la technique, notamment au niveau de sa simplicité, de sa fiabilité et du fait que la détection de l'engagement en position correcte d'accrochage des moyens de fixation du siège enfant sur le siège du véhicule, se fait sans contact.

Il va de soi bien entendu que d'autres modes de réalisation d'un tel système peuvent être envisagés.

## Revendications

1. Système de sécurité pour siège de véhicule automobile, associé à au moins un module à sac gonflable (5), le siège (3) du véhicule comportant des moyens (7) formant boucle d'ancrage adaptés pour coopérer avec des moyens (8) formant pêne d'accrochage d'un siège enfant (4) sur ce siège du véhicule et des moyens de détection de la présence de ce siège enfant pour désactiver le fonctionnement du module à sac gonflable (5), caractérisé en ce que les moyens de détection comportent des moyens inductifs (9,10,11) de détection de l'engagement en position correcte d'accrochage des moyens formant pêne (8) dans les moyens formant boucle (7).

2. Système selon la revendication 1, caractérisé en ce qu'au moins une portion des ou de chaque moyens formant pêne (8) est en matériau ferromagnétique et en ce qu'au moins une bobine (9) est associée aux ou à chaque moyens formant boucle (7) et est reliée d'une part à des moyens de génération d'un signal d'excitation (10) et d'autre part, à des moyens d'analyse (11) du signal aux bornes de cette bobine (9) pour détecter la présence ou l'absence des moyens formant pêne dans les moyens formant boucle.

3. Système selon la revendication 1 ou 2, caractérisé en ce que le siège du véhicule est un siège de passager avant de celui-ci et en ce que le module à sac gonflable (5) est intégré dans une planche de bord (2) du véhicule.
